Europäisches Patentamt

European Patent Office

Office européen des brevets

(19)

(11) Veröffentlichungsnummer: **0 271 597 B1**

(12) ## EUROPÄISCHE PATENTSCHRIFT

(45) Veröffentlichungstag der Patentschrift: 27.03.91  (51) Int. Cl.⁵: **A61C 1/05**, F16K 15/04

(21) Anmeldenummer: 86117637.8

(22) Anmeldetag: 18.12.86

(54) **Rückschlagventil für den Einbau in den Fluidkanal eines medizinischen Gerätes.**

(43) Veröffentlichungstag der Anmeldung:
22.06.88 Patentblatt 88/25

(45) Bekanntmachung des Hinweises auf die
Patenterteilung:
27.03.91 Patentblatt 91/13

(84) Benannte Vertragsstaaten:
AT CH DE FR IT LI

(56) Entgegenhaltungen:
WO-A-81/01364          AT-B- 111 206
DE-A- 2 901 902        DE-A- 3 024 998
DE-A- 3 329 652        DE-B- 1 291 055
FR-A- 379 258          FR-A- 2 517 026

(73) Patentinhaber: **Siemens Aktiengesellschaft
Wittelsbacherplatz 2
W-8000 München 2(DE)**

(72) Erfinder: **Helfrich, Hans
Südring 55
W-6947 Laudenbach(DE)**

**Beschreibung**

Die Erfindung betrifft ein federbelastetes Rückschlagventil nach dem Oberbegriff des Anspruches 1 oder 2,

Bei ärztlichen, insbesondere zahnärztlichen, Geräten, unter letzteren sollen im folgenden sowohl Units, als auch Bausteine davon, im besonderen Handstücke, verstanden werden, werden Rückschlagventile u.a. dazu eingesetzt, nach Abschalten des Fluids (Luft und/oder Wasser) ein Zurückfließen des Fluids in die Zuleitungswege zu verhindern und dabei zu vermeiden, daß aus dem Behandlungsbereich (Mundhöhle) aufgenommene Keime in den Gerätebereich gelangen können, der nicht nach jeder Behandlung sterilisiert werden kann.

Aus der DE-A2-I2 91 055 und WO 81/01364 sind Rückschlagventile bekannt, die üblicherweise einen Schließ- oder Dichtkörper enthalten, der mit Hilfe einer separaten Druckfeder gegen den Ventilsitz gedrückt wird. Als Schließkörper sind in der Regel Kugeln oder halbkugelförmige Körper eingesetzt wobei der Ventilsitz durch einen der Kugelform angepaßten Kegel oder auch durch einen im Fluidkanal angeordneten, gegen einen Absatz anliegenden elastischen Ring (0-Ring) gebildet sein kann.

Gerade bei medizinischen, insbesondere zahnmedizinischen, Geräten sind solche Ventile in Leitungskanälen mit sehr kleinen Querschnitten (ca. 2 bis 3 mm Innendurchmesser) einzusetzen.

Die Montage und Demontage des Ventils, sei es zum Zwecke des Auswechselns oder zum Zwecke einer Reinigung des Ventilsitzes bzw. des Leitungskanales, in dem das Ventil untergebracht ist, ist insbesondere wegen der engen Leitungsquerschnitte und der kleinen Baugröße des Ventils bzw. dessen Einzelteile problematisch. So besteht beim Zerlegen leicht die Gefahr, daß Druckfeder und Kugel verloren gehen.

Aus der DE-A-30 24 998 ist zwar ein Rückschlagventil bekannt, bei dem Schließkörper, Federelement und ein Endabschnitt ein Bauteil bilden; dieses Ventil soll jedoch für andere Zwecke eingesetzt werden, insbesondere ist es für den Einsatz in Kraftstoffniederdruck-Förderpumpen bei Kraftfahrzeugen gedacht. In der genannten Druckschrift werden zwei Ausführungsformen beschrieben. Bei der einen Ausführungsform hat der Schließ- bzw. Dichtkörper eine pilzförmige Gestalt, mit ihm verbunden ist eine elastische Blattfeder, die an ihrem freien, abgewinkelten Ende fest mit einem Bodenteil des Ventilkörpers verbunden ist. Bei der zweiten Ausführungsform besteht der Schließ- bzw. Dichtkörper aus zwei entenschnabelförmigen Hälften, die durch materialeigene Vorspannung einen normalerweise durch die Vorspannung geschlossenen Spalt bilden. Die beiden Schnabelhälften bilden zusammen mit einem hohlzylindrisch ausgebildeten Trägerteil, welches mittels Gewinde mit einem Gehäuse der Ventileinheit verbunden ist, eine Baueinheit.

Der in den Ansprüchen 1 und 2 angegebenen Erfindung liegt die Aufgabe zugrunde, ein Rückschlagventil der im Patentanspruch angegebenen Gattung zu schaffen, welches fertigungstechnisch einfach herzustellen is und im Bedarfsfalle relativ rasch und problemlos ausgewechselt werden kann.

Ein Vorteil des erfindungsgemäßen Ventils ist, daß das Fluid sowohl axial als auch in einem Winkel zur Achsrichtung (Einbaurichtung) durch den federelastischen Abschnitt geleitet werden kann. Das Ventil ist so vielseitig einsetzbar.

Besondere Vorteile werden erzielt, wenn das erfindungsgemäße Rückschlagventil in einen Leitungskanal eines zahnärztlichen Handstückes eingebaut ist, und zwar im Bereich der Austrittsstelle des Fluids am Kopfgehäuse des Handstückes, vorteilhafterweise am unmittelbaren Ende eines im Kopfgehäuse ausmündenden Leitungskanales, der mit einem vor der Mündungsstelle seitlich wegführenden Leitungskanals verbunden ist, über den das Fluid bis zur Austrittsstelle geführt wird. An dieser Stelle hat das Rückschlagventil neben der Ventilfunktion auch eine Abdichtungsfunktion zwischen Leitungskanal und Kopfgehäuse.

Das Ventil, welches sehr klein ausgebildet und daher sehr weit vorne in Nähe des Austrittskanales angeordnet sein kann, besteht vorteilhafterweise aus sterilisierbarem, keimresistentem Material, vorzugsweise aus einem Kunststoff mit diesen Eigenschaften; es kann so zusammen mit dem Handstück sterilisiert werden.

Nachfolgend werden anhand der Zeichnung mehrere Ausführungsbeispiele der Erfindung erläutert. Es zeigen:

Fig. 1 ein zahnärztliches Turbinenhandstück in schaubildlicher Darstellung,

Fig. 2 einen Teil des Handstückes nach Fig. 1 im Längsschnitt,

Fig. 3 und 4 das in Fig. 2 gezeigte Ventil in zwei Ansichten, wobei in Fig. 4 das Ventil im Schnitt zeigt,

Fig. 5 eine Modifikation des Ventils nach Fig. 3,

Fig. 6 und 7 eine weitere Ausführungsform eines Ventils in zwei Ansichten,

Fig. 8 eine weitere Ausführungsform eines Ventils in schaubildlicher Darstellung,

Fig. 9 das Ventil nach Fig. 8 in einer Seitenansicht,

Fig. 10 und 11 eine Modifikation der Ventilausführung nach Fig. 8/9 einerseits im Längsschnitt, andererseits im Querschnitt.

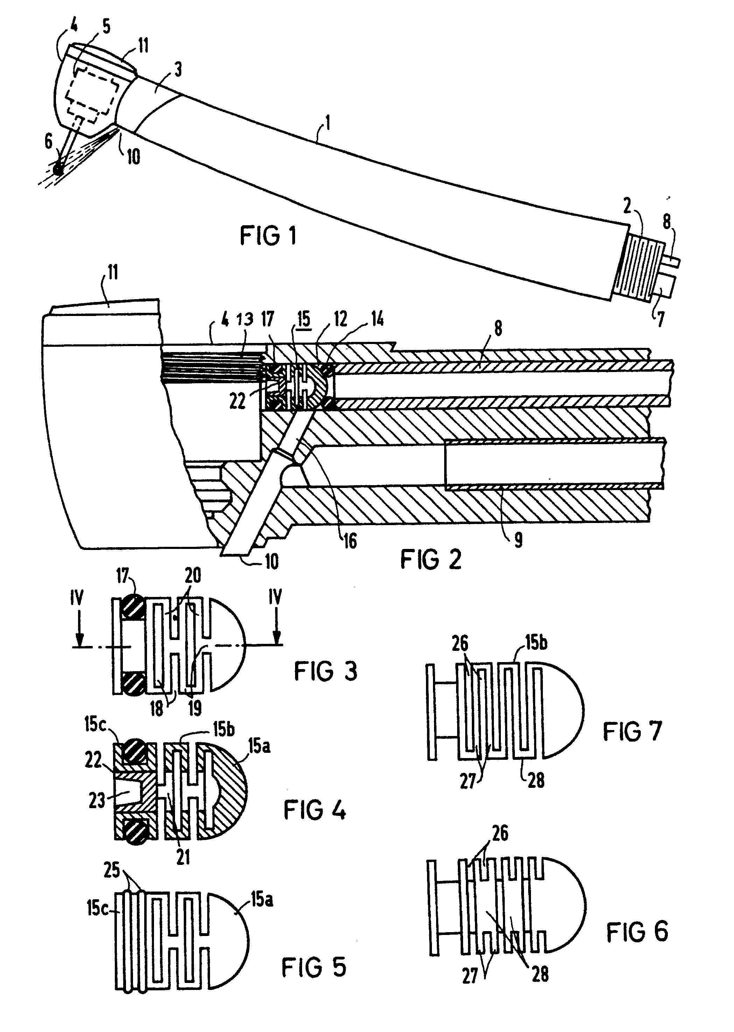

Die Fig. 1 zeigt in einer schaubildlichen Darstellung ein zahnärztliches Turbinenhandstück mit einer Griffhülse 1, an derem einen Ende eine Anschlußarmatur 2 für den Anschluß an einen Versorgungsschlauch und an derem anderen Ende ein Kopfteil 3 angeordnet ist, welches in bekannter Weise ein Kopfgehäuse 4 enthält, in dem ein mit Luft angetriebener Antrieb 5 für ein Werkzeug 6 angeordnet ist. Die Zufuhr der hierfür notwendigen Druckluft erfolgt über eine Druckluftleitung 7. Zur Bildung eines Wasser-Luftgemisches an der Präparationsstelle wird einerseits über eine Wasserleitung 8 Spraywasser und andererseits über eine weitere Leitung 9 (FIG 2) Sprayluft an das Kopfgehäuse herangeführt, wobei die Sprayluftleitung 9 entweder von der Druckluftleitung 7 abgezweigt oder eine separate, vom Versorgungsschlauch kommende Leitung sein kann. Sprayluft und Spraywasser werden in Nähe des Kopfgehäuses gemischt und können über eine Düsenaustrittsöffnung 10 auf die Werkzeugspitze gerichtet austreten. Das Kopfgehäuse 4 ist an dem dem Werkzeug abgewandten Ende mittels eines Schraubdeckels 11 verschlossen; nach dessen Abnahme kann das gesamte Antriebsaggregat 5 entnommen werden. Das im Kopfgehäuse 4 vorgesehene Gewinde ist mit 13 bezeichnet.

In Fig. 2 ist der im Längsschnitt gezeichnete Teil des Kopfgehäuses ohne Antriebsaggregat und Schraubdeckel 11 dargestellt. Es ist erkennbar, daß ein achsparallel verlaufender und in das Innere des Kopfgehäuses 4 ausmündender Kanal 12 mit gleichbleibendem Querschnitt vorgesehen ist, in den die als Rohr ausgebildete Spraywasserleitung 8 eingeführt ist. Am stirnseitigen Ende der Leitung 8 liegt ein O-Ring 14 an, welcher den Ventilsitz für ein allgemein mit 15 bezeichnetes Rückschlagventil bildet. Mit dem Rückschlagventil 15 wird einerseits die Zufuhr von Spraywasser über die Leitung 8 in eine zur Austrittsöffnung 10 führende Abzweigleitung 16 gesteuert und andererseits ein Rückfluß des Fluids in die Spraywasserleitung 8 verhindert. Außer der Ventilfunktion hat das Rückschlagventil auch eine Abdichtfunktion; mittels eines weiteren O-Ringes 17 wird eine Abdichtung des Spraywasserkanals gegenüber dem Inneren des Kopfgehäuses 4 erreicht. Das Rückschlagventil 15 kann sehr leicht ausgewechselt werden, hierzu braucht lediglich der Schraubdeckel 11 und anschließend das Antriebsaggregat 5 abgenommen zu werden. Danach kann das Ventil achsparallel aus dem Kanal 12 abgezogen werden. Im montierten Zustand liegt das Ventil 15 an der Außenwandung des Schraubdeckels 11 an.

Die Fig. 3 und 4 zeigen das Ventil 15 in um 90° zueinander versetzten Ansichten, wobei Fig. 4 das Ventil 15 im Schnitt zeigt. Das Ventil 15 besteht aus einem rotationssymmetrischen Grundkörper, der sich in drei Abschnitte unterteilen läßt, in einen Abschnitt 15a, der den Schließ- oder Dichtkörper bildet, in einen federnden Abschnitt 15b und in einen Endabschnitt 15c. Alle drei Abschnitte weisen Mantelflächen mit praktisch gleichem Außendurchmesser wie der Innendurchmesser des Fluidkanals 12 auf. Während der Endabschnitt 15c mittels des Dichtringes 17 im Leitungskanal 12 ortsfest gehaltert ist, sind die beiden Abschnitte 15a, 15b demgegenüber in Achsrichtung axial beweglich, wozu ihre Außendurchmesser geringfügig kleiner sind als der Durchmesser des Leitungskanals.

Der federnde Abschnitt 15b wird gebildet durch versetzt angeordnete Schlitze 18, welche durch Stege 19 miteinander verbundene Lamellen 20 bilden. Im vorliegenden Falle beträgt bei einer Gesamtlänge des Ventils von etwa 3,5 mm und einem Durchmesser von 2,5 mm die Schlitzbreite etwa 0,25 mm, die Lamellenbreite etwa 0,15 mm (und kleiner). Das Ventil enthält im Zentrum ferner eine die Schlitze miteinander verbindende Bohrung 21, die dem Schließkörper 15a abgewandt durch einen Verschlußstopfen 22 verschlossen ist. Der Verschlußstopfen 22 ist mit einem Sackloch 23 versehen, welches dazu dient das Ventil mit Hilfe eines geeigneten Werkzeuges (Pinzette, o.dgl.) leichter aus dem Leitungskanal herausnehmen zu können.

Die Abdichtung des Ventils gegenüber dem Kopfgehäuse kann anstelle über des gezeigten O-Ringes 17 auch über ein oder mehrere Dichtlippen 25 erfolgen, wie dies in Fig. 5 gezeigt ist, wobei diese Dichtlippen an den Endabschnitt 15c angeformt, also Bestandteil des gesamten Ventiles sind.

Die Fig. 6 und 7 zeigen in zwei um 90° zueinander versetzten Ansichten eine weitere Ausführungsform; auch hier sind durch Schlitze 26 im Abschnitt 15b Lamellen 27 gebildet, die durch Stege 28 miteinander verbunden sind. Der federnde Abschnitt 15b ist sowohl mit dem Schließkörper 15a als auch mit dem Endabschnitt 15c verbunden.

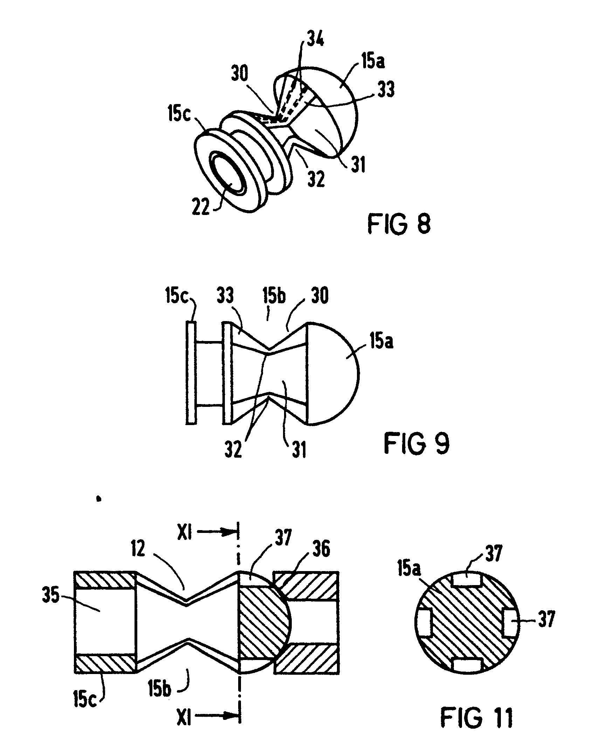

Bei der Ausführungsform nach den Fig. 8 und 9 ist der federnde Abschnitt 15b einerseits durch eine Einschnürung 30 und andererseits durch eine Durchbrechung 31 gebildet. Im Bereich der stärksten Materialschwächung wird ein sogenanntes Filmscharnier 32 gebildet, das den erforderlichen Hub zur Betätigung des Ventiles ermöglicht. Das rückwärtige Ende, also der Endabschnitt 15c, kann wie bei der Ausführungsform nach Fig. 2 durch einen mit einem Sackloch versehenen Stopfen 22 verschlossen sein. Wie aus der Darstellung ersichtlich, werden durch die Einschnürung und die Durchbrechung zwei diametral einander gegenüberliegende Mantelabschnitte 33 gebildet, die sich über jeweils etwa 30° des gesamten Umfanges erstrecken. Denkbar und im Rahmen der Erfindung ist es, die durch die Einschnürung 30 gebildete Mantelfläche über den gesamten Umfang beizubehalten und anstelle der einzigen Durchbrechung 31 eine Vielzahl von längs des Abschnittes 15b sich erstreckenden Schlitzen 34 vorzusehen, wie dies in Fig. 8 gestrichelt angedeutet ist.

Die Fig. 10 und 11 zeigen einerseits im Längsschnitt und andererseits im Querschnitt eine der in Fig. 8 und 9 gezeigten Ausführung ähnliche Variante. Hier erfolgt der Mediendurchgang jedoch in Achsrichtung, was bedeutet, daß der Endabschnitt 15c gegenüber dem Leitungskanal 12, in dem das Ventil angeordnet ist, nicht abgedichtet ist, sondern eine durchgehende Bohrung 35 aufweist. Der Endabschnitt selbst ist im Leitungskanal fest eingepreßt oder durch einen Anschlag gesichert. Der Ventilkörper weist am Umfang gesehen außerhalb des Ventilsitzes 36 vier Längsschlitze 37 auf, die bei Öffnen des Ventiles ein Einströmen des Mediums in den mittleren Abschnitt 15b ermöglichen.

**Ansprüche**

1. Federbelastetes Rückschlagventil für den Einbau in den Fluidkanal eines ärztlichen, insbesondere zahnärztlichen Gerätes, enthaltend einen Schließkörper (l5a), ein mit dem Schließkörper verbundenes und diesen gegen einen Ventilsitz (14) drückendes Federelement (l5b) und einen mit dem Federelement verbundenen, gegenüber dem Schließkörper ortsfest angeordneten Endabschnitt (l5c), wobei Schließkörper, Federelement und Endabschnitt ein Bauteil Bilden, und das Federelement von einem Zwischen Schließkörper (l5a) und Endabschnitt (15c) angeordneten, federelastischen Abschnitt (l5b) gebildet ist dessen Außendurchmesser gleich oder kleiner ist als der Außendurchmesser des Schließkörpers (15a) **dadurch gekennzeichnet,** ß daß der federelastische Abschnitt (15b) durch mehrere hintereinander und gegeneinander versetzt angeordnete, quer zur Längssymmetrieachse verlaufende schlitzartige Ausnehmungen (18) in einem rotationssymmetrischen, vorzugsweise zylindrischen, Grundkörper gebildet ist, welche durch Stege (19) miteinander verbundene federnde Lamellen (20) bilden, und daß der Endabschnitt (15c) eine sich in Achsrichtung bis zu den Lamellen (20) erstreckende Ausnehmung (2l) enthält, welche mit den zwischen den Lamellen befindlichen Schlitzen (18) eine Verbindung herstellt.

2. Federbelastetes Rückschlagventil für den Einbau in den Fluidkanal eines ärztlichen, insbesondere zahnärztlichen Gerätes, enthaltend einen Schließkörper (15a), ein mit dem Schließkörper verbundenes und diesen gegen einen Ventilsitz (14) drückendes Federelement (l5b) und einen mit dem Federelement verbundenen, gegenüber dem Schließkörper ortsfest angeordneten Endabschnitt (15c), wobei Schließkörper, Federelement und Endabschnitt ein Bauteil bilden, **dadurch gekennzeichnet ,** daß der federelastische Abschnitt (15b) durch eine Einschnürung (30) gebildet ist, welche im Bereich einer Materialschwächung ein Filmscharnier (32) bildet.

3. Ventil nach Anspruch 2, **dadurch gekennzeichnet ,** daß der federelastische Abschnitt (l5b) zusätzlich zu der Einschnürung (30) mit ein oder mehreren Durchbrechungen (31, 34) versehen ist.

4. Ventil nach Anspruch 1 oder 2, **dadurch gekennzeichnet,** daß der schließKorper (15a) halbkugelförmie ist und im Bereich außerhalb des Ventilsitzes (36) Längsschlitze (37) zur Überleitung des Fluids in einen weiterführenden Kanal (35) aufweist.

5. Ventil nach einem der Ansprüche 1 bis 4, **dadurch gekennzeichnet ,** daß der Endabschnitt (l5c) mit Hilfe eines oder mehrerer Dichtelemente in Form von Dichtlippen oder O-Ringen (17, 25) im Leitungskanal (12) ortsfest fixierbar ist.

6. Ventil nach Anspruch 1 oder , **dadurch gekennzeichnet ,** daß das Federelement (15b) und der Endabschnitt (15c) eine am Endabschnitt (15c) durch einen Stopfen (22) verschlossene Ausnehmung (21) enthalten.

7. Ventil nach Anspruch 6, **dadurchgekennzeichnet ,** daß der Stopfen (22) mit einem Sackloch (23) für den Eingriff eines Hilfsmittels zur Entnahme des Ventils aus dem Leitungskanal (12) versehen ist.

8. Kombination eines zahnârztlichen Handstückes mit einem Ventil nach einem der Ansprüche 1 bis 7, **dadurch gekennzeichnet ,** daß es nahe der Austrittsstelle des Fluids in einem achsparallel verlaufenden Leitungskanal (8, 12) des Kopfteiles (3) des zahnärztlichen Handstückes angeordnet ist, wobei der Leitungskanal in Flußrichtung gesehen nach dem Ventilsitz (14) mit einem zur Austrittsöffnung (10) führenden Abzweigkanal (16) verbunden ist, und der Leitungskanal (12) in Achsrichtung gesehen nach der Abzweigung in Achsrichtung verschlossen ist.

9. Kombinations nach Anspruch 8, **dadurch gekennzeichnet ,** daß der achsparallele Leitungskanal (12) in das Kopfgehäuse (4) des Handstückes mündet, und daß das Ventil (15) unmittelbar an der Mündungsstelle des Leitungskanals in das Kopfgehäuse (4) zum Kopfgehäuseinneren hin aus dem Leitungskanal entnehmbar angeordnet ist.

## Claims

1. Spring-loaded non-return valve for installation in the fluid channel of a medical apparatus, in particular a dental apparatus, the valve containing a closing body (15a), a spring element (15b) connected to the closing body and pressing this closing body against a valve seat (14), and an end section (15c) connected to the spring element and arranged in a fixed position in relation to the closing body, with the closing body, the spring element and the end section forming an assembly, and the spring element is formed by a springy elastic section (15b) arranged between the closing body (15a) and the end section (15c), the outer diameter of which springy elastic section (l5b) is the same as or less than the outer diameter of the closing body (15a), **characterised in that** the springy elastic section (15b) is formed by several slit-like recesses (18) arranged successively and offset in relation to each other, extending transversely to the longitudinal axis of symmetry, in a rotationally symmetrical, preferably cylindrical,main body which recesses form spring platelets (20) connected together by bridges (19), and in that the end section (15c) contains a recess (21) extending in axial direction up to the platelets (20), which recess (21) produces a connection to the slits (18) located between the platelets.

2. Spring-loaded non-return valve for installation in the fluid channel of a medical apparatus, in particular a dental apparatus, this valve containing a closing body (15a), a spring element (15b) connected to the closing body and pressing this closing body against a valve body (14), and an end section (15c) connected to the spring element and arranged in a fixed position in relation to the closing body, with the closing body, the spring element and the end section forming an assembly, **characterised in that** the springy elastic section (15b) is formed by a constriction (30) which forms a film hinge (32) in the region of a weakening in the material.

3. Valve according to claim 2,

characterised in that the springy elastic section (15b) is provided with one or more perforations (31, 34) in addition to the constriction (30).

4. Valve according to claim 1 or 2, **characterised in that** the closing body (15a) is hemispherical and has, in the region outside the valve seat (36), longitudinal slits (37) for transferring the fluid into a continuation channel (35).

5. Valve according to one of claims 1 to 4, **characterised in that** the end section (15c) can be attached in a fixed position in the duct (12) with the help of one or more sealing elements in the form of sealing lips or 0-rings (17, 25).

6. Valve according to claim 1 or 2, **characterised in that** the spring element (15b) and the end section (15c) contain a recess (21) which is closed off at the end section (15c) by a stopper (22).

7. Valve according to claim 6, **characterised in that** the stopper (22) is provided with a blind hole (23) for engaging a device for removing the valve from the duct (12).

8. Combination of a dental handpiece and a valve according to one of claims 1 to 7, **characterised in that** the valve is arranged near the fluid outlet point, in a duct (8, 12) of the head part (3) of the dental handpiece, the duct (8, 12) extending parallel to the axis and being connected after the valve seat (14), as seen in the direction of flow, to a branch channel (16) leading to the outlet aperture (10), and the duct (12) being closed off in the axial direction after the branching off, as seen in the axial direction.

9. Combination according to claim 8, **characterised in that** the duct (12) parallel to the axis opens into the head housing (4) of the handpiece, and in that the valve (15) is arranged directly at the place where the duct opens into the head housing (4), so that the said valve (15) can be removed, towards the inside of the head housing, from the duct.

## Revendications

1. Soupape antiretour chargée par un ressort et destinée à ètre montée dans le conduit véhiculant un fluide d'un appareil médical, notamment d'un appareil de dentisterie, contenant un corps de fermeture (15a), un élément élastique (15b) relié au corps de fermeture et repoussant ce dernier contre un siège de soupape (14), et une section d'extrémité (15a) reliée à l'élément de ressort et montée fixe par rapport au corps de fermeture, et dans lequel le corps de fermeture, l'élément de ressort et la section d'extrémité forment une unité de construction et l'élément de ressort est formé par une section élastique (15b), qui est située entre le corps de fermeture (15a) et la section d'extrémité (15c) et dont le diamètre extérieur est égal ou inférieur au diamètre extérieur du corps de fermeture (15a), caractérisée par le fait que la section élastique (15b) est constituée par plusieurs évidements en forme de fentes (18), qui sont disposés les uns derrière les autres en étant décalés réciproquement, s'étendent transversalement par rapport à l'axe longitudinal de symétrie et sont ménagés dans un corps de base à symétrie de révolution, de préférence cylindrique, et délimitent des lamelles élastiques (20) reliées entre elles par des barrettes (19), et que la section d'extrémité (15c) contient un évidement (21), qui s'étend dans la direction axiale jusqu' aux lamelles (20) et établit une liaison avec les fentes (18) situées entre les lamelles.

2.  Soupape antiretour chargée par un ressort et destinée à être montée dans le conduit véhiculant un fluide d'un appareil médical, notamment d'un appareil de dentisterie, contenant un corps de fermeture (15a), un élément élastique (15b) relié au corps de fermeture et repoussant ce dernier contre un siège de soupape (14), et une section d'extrémité (15a) reliée à l'élément de ressort et montée fixe par rapport au corps de fermeture, et dans lequel le corps de fermeture, l'élément de ressort et la section d'extrémité forment une unité de construction, caractérisée par le fait que la section élastique (15b) est formée par un rétrécissement (30), qui constitue, dans une zone d'amincissement du matériau, une charnière en forme de pellicule (32).

3.  Soupape suivant la revendication 2, caractérisée par le fait que la section élastique (15b) comporte, en plus du rétrécissement (30), un ou plusieurs passages (31,34).

4.  Soupape suivant la revendication 1 ou 2, caractérisée par le fait que le corps de fermeture (15a) possède une forme hémisphérique et comporte, dans la zone située à l'extérieur du siège de soupape (36), des fentes longitudinales (37) servant au transfert du fluide dans un canal aval (35).

5.  Soupape suivant l'une des revendications 1 à 4, caractérisée par le fait que la section d'extrémité (15c) peut être fixée à l'aide d'un ou plusieurs éléments d'étanchéité se présentant sous la forme de lèvres d'étanchéité ou de joints toriques (17,25) dans le canal de passage (12).

6.  Soupape suivant la revendication 1 ou 2, caractérisée par le fait que l'élément de ressort (15b) et la section d'extrémité (15c) contiennent un évidement (21) fermé, au niveau de la section d'extrémité (15c), par un bouchon (22).

7.  Soupape suivant la revendication 6, caractérisée par le fait que le bouchon (22) comporte un trou borgne (23) permettant d'y engager un moyen auxiliaire permettant de re tirer la soupape hors du canal de passage (12).

8.  Combinaison d'une pièce à main de dentisterie et d'une soupape suivant l'une des revendications 1 à 5, caractérisée par le fait que la soupape est disposée à proximité du point de sortie du fluide dans un canal de passage (8,12), parallèle à l'axe, de la partie de tête (3) de la pièce à main de dentisterie, le canal de passage étant relié en aval du siège de soupape (14), lorsqu'on regarde dans la direction d'écoulement, à un canal de dérivation (16) aboutissant à l'ouverture de sortie (10), et que le canal de passage (12) est fermé en aval de la dérivation dans la direction axiale, lorsqu'on regarde dans cette direction.

9.  Combinaison suivant la revendication 8, caractérisée par le fait que le canal de passage (12) parallèle à l'axe débouche dans le boîtier de tête (4) de la pièce à main, et que la soupape (15) est montée directement au niveau de l'emplacement où le canal de passage débouche dans le boîtier de tête (4) en direction de l'intérieur de ce carter, de manière à pouvoir être retiré du canal de passage.

FIG 1

FIG 2

FIG 3

FIG 4

FIG 5

FIG 6

FIG 7

FIG 8

FIG 9

FIG 11